Europäisches Patentamt

European Patent Office

Office européen des brevets

(11) Veröffentlichungsnummer: **0 270 942**
**A2**

(12) **EUROPÄISCHE PATENTANMELDUNG**

(21) Anmeldenummer: 87117535.2

(22) Anmeldetag: 27.11.87

(51) Int. Cl.⁴: **B60J 5/04**

(30) Priorität: 11.12.86 DE 3642428

(43) Veröffentlichungstag der Anmeldung:
15.06.88 Patentblatt 88/24

(84) Benannte Vertragsstaaten:
AT BE CH DE ES FR GB GR IT LI LU NL SE

(71) Anmelder: **Hüls Troisdorf Aktiengesellschaft**
**Postfach 11 65**
**D-5210 Troisdorf(DE)**

(72) Erfinder: **Hellriegel, Edmund**
**Akazienweg 1**
**D-5024 Pulheim(DE)**

(54) **Fahrzeug mit Fahrzeugtür und Türdichtung.**

(57) Es wird ein Fahrzeug mit wenigstens einer Fahrzeugtür und einer umlaufenden Türdichtung beschrieben, wobei die Scharnierachse die Fahrzeugkarosserie durchdringt, so daß die Fahrzeugtür beim Öffnen in einen Teilbereich zum Fahrzeuginneren und im restlichen Bereich gegenläufig bewegt wird, und wobei die Türdichtung so angeordnet ist, daß sie die zwischen der Fahrzeugtür und der Karosserie gebildete äußere Türfuge an oder in unmittelbarer Nähe der Türaußenwand vollständig abdichtet.

EP 0 270 942 A2

## Fahrzeug mit Fahrzeugtür und Türdichtung

Die Erfindung betrifft ein Fahrzeug mit wenigstens einer Fahrzeugtür und mit einer umlaufenden Türdichtung gemäß dem Oberbegriff des Anspruchs 1.

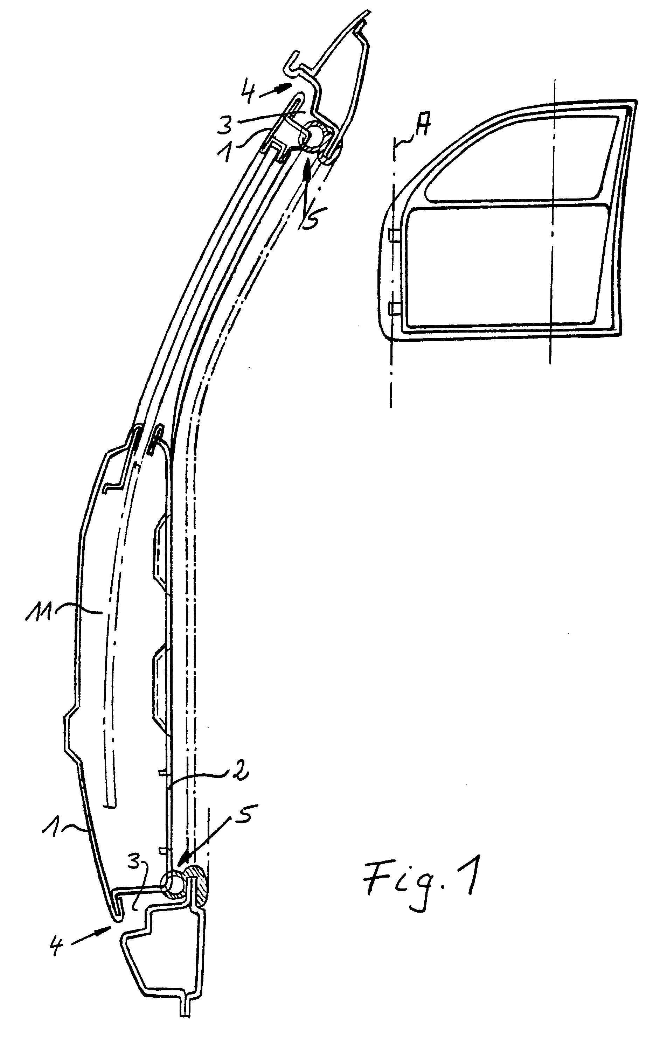

Gattungsgemäße Fahrzeuge sind seit langem bekannt. Figur 1 zeigt zur Erläuterung eine gattungsgemäße Fahrzeugtür mit den entsprechenden Begrenzungsprofilen der Karosserie im Querschnitt. Die Fahrzeugtür 11 weist dabei eine Außenwand 1 und eine im Abstand zu der Außenwand angeordnete Innenwand 2 auf. Die Türen eines gattungsgemäßen Fahrzeugs sind mittels - im allgemeinen jeweils zwei - Scharnieren an der Fahrzeugkarosserie schwenkbar angelenkt.

Die Fahrzeugtür bildet im geschlossenen Zustand mit dem entsprechenden Türausschnitt der Karosserie einen - sich um die Tür erstreckenden - Hohlraum 3 mit veränderlichem Querschnitt. Die Scharniere der Fahrzeugtüren eines gattungsgemäßen Fahrzeuges sind regelmäßig innerhalb des umlaufenden Hohlraumes so angeordnet, daß die Schwenkachse A der Fahrzeugtür den Hohlraum zwischen der Fahrzeugtür und der Fahrzeugkarosserie durchdringt. Die Anordnung der Schwenkachse - in Fahrtrichtung betrachtet - hinter der vordersten Kante der Türaußenwand bedingt, daß der vor der Schwenkachse liegende Teilbereich der Türaußenwand beim Öffnen der Fahrzeugtür zum Fahrzeuginneren bewegt wird, während der hinter der Schwenkachse liegende Teil der Türaußenwand eine gegenläufige Schwenkbewegung ausführt, also vom Fahrzeuginneren wegbewegt wird.

Da die Türinnenwand normalerweise geringere Abmessungen aufweist als die Türaußenwand und vollständig hinter der Schwenkachse - in Fahrtrichtung betrachtet - angeordnet ist, bewegt sich die Türinnenwand beim Öffnen der Tür gleichförmig nach außen. Nach dem Stand der Technik ist es deshalb üblich, im Türausschnitt der Karosserie eine umlaufende Dichtung so anzuordnen, daß die Fahrzeugtür gegenüber der Fahrzeugkarosserie entlang der inneren Türfuge 5 (Fig.1) abgedichtet wird.

Diese bekannte Anordnung einer Türabdichtung für gattungsgemäße Fahrzeuge hat den Nachteil, daß der zwischen der Fahrzeugtür und dem Türausschnitt der Fahrzeugkarosserie gebildete umlaufende Hohlraum nach außen nicht abgedichtet ist gegenüber eindringendem Wasser und Schmutz, der sich beim Einstieg in das Fahrzeug auf die Kleidung der Fahrzeuginsassen überträgt. Weiterhin bildet der umlaufende Hohlraum eine Resonanzkörper für Windgeräusche, die an der äußeren, offenen Türfuge (Türfuge 4 gemäß Fig.1) entstehen können.

Es ist zur Verminderung dieser Nachteile bereits bekannt geworden, Teilbereiche der äußeren Türfuge mit zusätzlichen, an der Fahrzeugkarosserie im umlaufenden Hohlraum angebrachten Dichtungen abzudichten, jedoch verursachen diese Maßnahmen zusätzliche Kosten.

Aus der US-PS 3,198,572 ist ein - nicht gattungsgemäßes - Fahrzeug mit einer Tür und einer umlaufenden Türdichtung bekannt, bei dem eine umlaufende Türdichtung vorne, d.h. in Scharniernähe, die innere Türfuge und hinten, d.h. in Schloßnähe, die äußere Türfuge abdichtet. Zusätzlich zu dieser umlaufenden Türdichtung ist im vorderen Bereich eine nicht umlaufende Zusatzdichtung zur Abdichtung der äußeren Türfuge angebracht. Die Anordnung dieser zusätzlichen, außenliegenden Türdichtung gemäß der US-PS 3,198,572 bedingt eine aufwendige Scharnierkonstruktion, bei der die Scharnierachse vor der vorderen Türkante angeordnet ist, so daß die Tür beim Öffnen auch im vorderen Bereich nach außen geschwenkt wird.

Auch sind schon Fahrzeuge bekannt geworden, die außerhalb der Fahrzeugaußenhaut liegende Scharniere aufweisen mit einer entsprechend außerhalb der äußersten Fahrzeugkontur verlaufenden Scharnierachse, wobei deren Fahrzeugtür mit einer die äußere Türfuge abdichtenden Türdichtung versehen wurde. Bei diesen - nicht gattungsgemäßen - Fahrzeugen beschreibt die gesamte Fahrzeugtür einschließlich der Türaußenwand beim Öffnen der Tür eine gleichförmige Schwenkbewegung nach außen.

Aufgabe der Erfindung ist es, ein gattungsgemäßes Fahrzeug mit wenigstens einer Fahrzeugtür und mit einer umlaufenden Türdichtung so zu gestalten, daß die obengenannten Nachteile wie Eindringen von Wasser und Schmutz sowie Geräuschen in den umlaufenden Hohlraum zwischen der Fahrzeugtür und dem Türausschnitt der Fahrzeugkarosserie vermieden werden.

Die Erfindung löst diese Aufgabe bei einem gattungsgemäßen Fahrzeug mit den kennzeichnenden Merkmalen des Anspruchs 1.

Die Anordnung der umlaufenden Türdichtung an oder in unmittelbarer Nähe der Türaußenwand in der Art, daß die äußere Türfuge abgedichtet wird, bewirkt, daß in dem umlaufenden Hohlraum zwischen Fahrzeugtür und Fahrzeugkarosserie in geschlossenem Zustand der Tür weder Wasser noch Schmutz oder Geräusche eindringen können.

Die umlaufende Dichtung kann gemäß der vorliegenden Erfindung entweder an der Fahrzeugkarosserie oder bevorzugt an der Fahrzeugtür angebracht sein.

Nach einer bevorzugten Ausbildung der Erfindung wird die umlaufende Dichtung dabei an einem ebenfalls um den Türkörper umlaufenden, insbesondere als einstückiger Bestandteil der Türaußenwand ausgebildeten Befestigungssteg befestigt. Dieser Befestigungssteg weist dabei in dem Bereich der Türaußenwand, der beim Öffnen der Fahrzeugtür zum Fahrzeuginneren bewegt wird, im wesentlichen vom Fahrzeuginneren nach außen. In dem restlichen Bereich der Türaußenwand, der, in Fahrtrichtung betrachtet, hinter der Schwenkachse liegt und damit eine Schwenkbewegung nach außen vollzieht, weist der Befestigungssteg entsprechend zum Fahrzeuginneren. Im Übergangsbereich zwischen dem vor und dem hinter der Scharnierachse liegenden Bereich der Türaußenwand wird die Richtung des Befestigungssteges stetig um etwa 180° gewendet. Auf diese Weise wird erreicht, daß ein Gleiten der Türdichtung an der Anlagefläche der Dichtung an der Karosserie vermieden wird. Die Türdichtung liegt bei dieser bevorzugten Ausführung der Erfindung - bei geschlossener Fahrzeugtür - auf ihrem gesamten Umfang mit gleichmäßigem Anpreßdruck an der umlaufenden Anlagefläche der Karosserie an.

Eine bevorzugte Ausbildung der Erfindung sieht vor, daß die Schwenkachse die umlaufende Türdichtung im Übergangsbereich an zwei Stellen - nämlich an der oberen und der unteren Türkontur - schneidet oder bevorzugt tangiert. Hierdurch wird erreicht, daß die Türdichtung beim Öffnen der Fahrzeugtür an dieser Stelle eine Abrollbewegung gegenüber der Karosserieanlagefläche ausführt.

Bevorzugt wird die Türdichtung einstückig als Hohlkammerprofil ausgeführt. Sie kann dabei aus mehreren Teilstücken durch Kleben zu einer umlaufenden, etwa ringförmigen Dichtung zusammengesetzt sein, oder unmittelbar durch Gießen oder bevorzugt durch Extrusion in einem Stück hergestellt werden.

Von besonderem Vorteil ist die Herstellung der umlaufenden Dichtung gemäß der Erfindung durch ein Extrusionsverfahren, wobei die Enden eines entsprechenden Abschnitts miteinander durch Kleben (Vulkanisieren) verbunden werden. Eine so durch Extrusion hergestellte einstückige Türdichtung weist an jeder Stelle der gleichen Querschnitt auf.

Bevorzugt wird die Türdichtung auf einem entsprechend ausgebildeten Befestigungssteg an der Fahrzeugtür, bevorzugt an der Türaußenwand, mittels eines in die Türdichtung integrierten Klemmprofileinsatzes durch Aufstecken befestigt. Der Klemmprofileinsatz weist dabei im Querschnitt eine etwa U-förmige Form auf.

Nach einer weiteren Ausgestaltung der Erfindung ist die Türdichtung als Hohlkammerprofilstrang mit etwa ringförmigem (oval-oder kreisförmigem) Querschnitt ausgeführt. Die Türdichtung kann dabei vorteilhaft wenigstens zwei, von der äußeren Kontur der Türdichtung insbesondere radial abstehende Dichtlippen aufweisen. Hierdurch wird erreicht, daß die an der Tür befestigte Türdichtung an dem Türausschnitt der Karosserie an zwei oder mehr umlaufenden Anlageflächen anliegt. Hierdurch wird die Dichtwirkung wesentlich erhöht.

Bevorzugt wird die Fahrzeugtür als Kunststoffkonstruktion ausgeführt, wobei insbesondere für die Außenwand das RRIM-(Reinforced Reaction Injection Molding-) Verfahren bevorzugt wird. Bei dieser Ausführungsform der Erfindung ist die einstückige Integration eines umlaufenden Befestigungssteges für die Türdichtung besonders einfach zu verwirklichen.

Bei der bevorzugten Ausführung der Erfindung, bei der die umlaufende Dichtung an der Tür befestigt ist, weist die Fahrzeugkarosserie eine umlaufende Anlagefläche für die Dichtung auf. Diese umlaufende Anlagefläche ist bevorzugt - im Querschnitt betrachtet - leicht gewölbt ausgeführt, wobei der Radius dieser Wölbung etwa der ebenfalls runden Form der umlaufenden Dichtung entsprechen sollte.

Es ist jedoch auch möglich, die umlaufende Dichtung an der Fahrzeugkarosserie anzubringen. In diesem Falle ist an der Fahrzeugtür eine umlaufende Anlagefläche für die umlaufende Dichtung vorgesehen.

Nach einer besonders bevorzugten Ausführungsform der Erfindung ist vorgesehen, daß die umlaufende Dichtung beim Schließen der Fahrzeugtür in einem solchen Winkel auf die umlaufende Anlagefläche trifft, daß die umlaufende Dichtung im wesentlichen ohne Gleitbewegung, d.h. ohne Reibung gegenüber der Anlagefläche, auf diese gedrückt und dabei elastisch komprimiert wird. Die umlaufende Dichtung sollte insbesondere möglichst senkrecht, d.h. in Richtung der Flächennormalen, auf die Anlagefläche auftreffen. Hierbei ist es sichergestellt, daß keine Reibung zwischen der Dichtung und der Anlagefläche stattfindet.

In den beiden Bereichen des Türumfangs, in denen die Scharnierachse in unmittelbarer Nähe der Türdichtung verläuft, ist unter Umständen eine gewisse Gleitreibung zwischen der Dichtung und der Anlagefläche nicht ganz zu vermeiden, da an diesen Stellen die Dichtung auch bei geöffneter Tür ständig in Kontakt mit der Anlagefläche stehen kann. Durch entsprechende Ausgestaltung der Anlagefläche kann jedoch erreicht werden, daß in diesen Bereichen überwiegend eine Rollbewegung zwischen der Dichtung und der Anlagefläche stattfindet, so daß eine Reibung weitgehend vermieden wird.

Nach einer weiteren bevorzugten Ausführungsform der Erfindung ist vorgesehen, zusätzlich zu der umlaufenden Anlagefläche an der Fahrzeugkarosserie in Teilbereichen oder ebenfalls umlaufend eine zweite Dichtfläche vorzusehen.

Im folgenden wird die Erfindung anhand eines Ausführungsbeispiels und einer Zeichnung näher erläutert.

Es zeigen dabei

Figur 1 eine gattungsgemäße Tür mit Türausschnitt der Karosserie und umlaufender Innendichtung gemäß dem Stand der Technik (Vergleichsbeispiel),

Figur 2 eine Fahrzeugtür gemäß der Erfindung in drei Ansichten,

Figur 3 einen Ausschnitt der Fahrzeugtür gemäß Figur 2, mit entsprechenden Schnittdarstellungen C-C bis G-G,

Figur 4 die Schnittdarstellungen K-K bis O-O der Fahrzeugtür gemäß Figur 2,

Figur 5 einen Querschnitt einer erfindungsgemäßen Türdichtung und

Figur 6 eine Abwicklung des U-förmigen Klemmeinsatzes gemäß Figur 5.

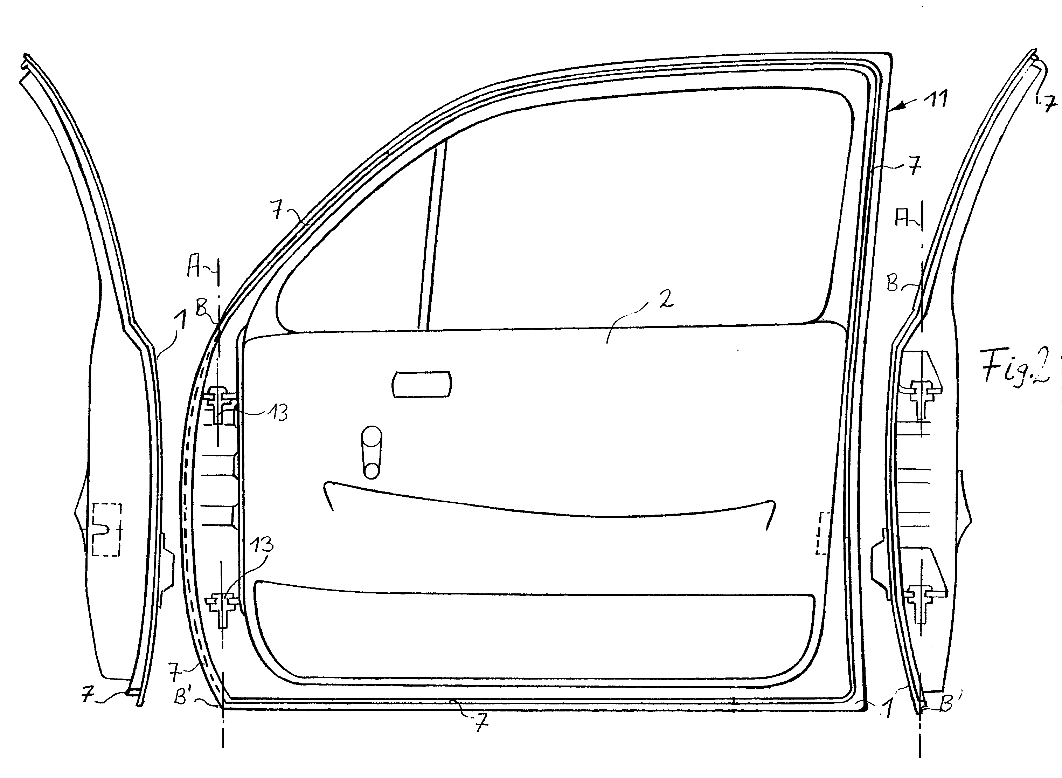

In Figur 2 ist eine Fahrzeugtür 11 gemäß einem Ausführungsbeispiel der Erfindung in drei Ansichten dargestellt.

Die Fahrzeugtür 11 besteht im wesentlichen aus der schalenförmigen Außenwand 1 und der aufgesetzten Innenwand 2, die unterhalb der Fensteröffnung endet. Außenwand 1 und Innenwand 2 sind im RRIM-(Reinforced Reaction Injection Molding-)Verfahren gefertigt, wobei in die Außenwand eine Skelettverstärkung 14 integriert wurde. Die durch die Scharniere 13 festgelegte Schwenk-(Scharnier-)Achse A teilt die Fahrzeugtür 11 in einen, in Fahrtrichtung gesehen, vor der Schwenkachse A liegenden Bereich (in Figur 2 links von der Schwenkachse A) und einen hinter der Schwenkachse A liegenden Bereich (in Figur 2 rechts von der Schwenkachse A).

Die Fahrzeugtür 11 weist gemäß dem dargestellten Ausführungsbeispiels der Erfindung einen entlang der äußeren Türkontur umlaufenden Befestigungssteg 7 zur Befestigung einer umlaufenden Türdichtung 6 auf. Dieser Befestigungssteg 7 ist in dem Bereich rechts von der Schwenkachse (gemäß Fig.2) an der Innenseite der Außenwand 1 angeordnet und weist etwa senkrecht zum Fahrzeuginneren.

Im Bereich links von der Schwenkachse (gemäß Fig.2) ist der Befestigungssteg 7 auf der Außenseite der Außenwand 1 angeordnet und weist etwa senkrecht vom Fahrzeuginneren nach außen.

Die Scharniere 13 werden so an der Fahrzeugtür 11 angeordnet, daß die Scharnierachse A die auf dem Befestigungssteg 7 aufgesteckte Türdichtung 6 an den beiden Stellen B und B' - (gemäß Fig.2) tangiert. Somit wird erreicht, daß die Türdichtung 6 in diesem Bereich eine Abrollbewegung bezüglich der entsprechenden Anlagefläche der Fahrzeugkarosserie 12 beschreibt.

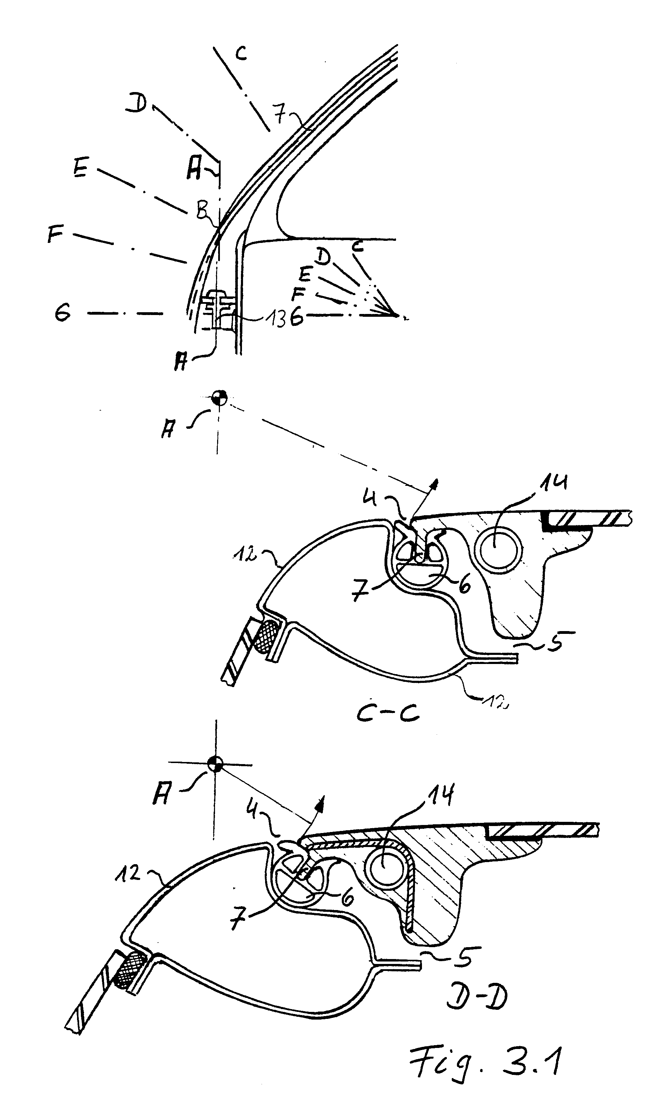

In Figur 3 ist der vordere, obere Ausschnitt der Fahrzeugtür 11 gemäß Figur 2 mit entsprechenden Schnittdarstellungen C-C bis G-G dargestellt. In den Schnittdarstellungen ist die räumliche Lage der Scharnierachse A sowie ein Ausschnitt der Fahrzeugkarosserie 12 eingezeichnet. Man erkennt, daß der Befestigungssteg 7 in dem dargestellten Bereich (Wendebereich) eine Drehung um ca. 180° vollzieht.

Im Schnitt E-E tangiert die Schwenkachse A gerade die Türdichtung 6, der Befestigungssteg 7 weist in dieser Stellung etwa in Fahrtrichtung. Im Schnitt G-G befindet sich der Befestigungssteg - in Fahrtrichtung betrachtet - vor der Schwenkachse A. Er beschreibt beim Öffnen der Fahrzeugtür 11 eine kreisförmige Bewegung um die Schwenkachse A zum Fahrzeuginneren. Entsprechend weist der Befestigungssteg 7 etwa senkrecht vom Fahrzeuginneren nach außen, so daß die umlaufende Türdichtung 6 die zwischen der Außenwand 1 der Fahrzeugtür 11 und der Karosserie 12 liegende äußere Türfuge 4 an der Türaußenwand 1 abdichtet.

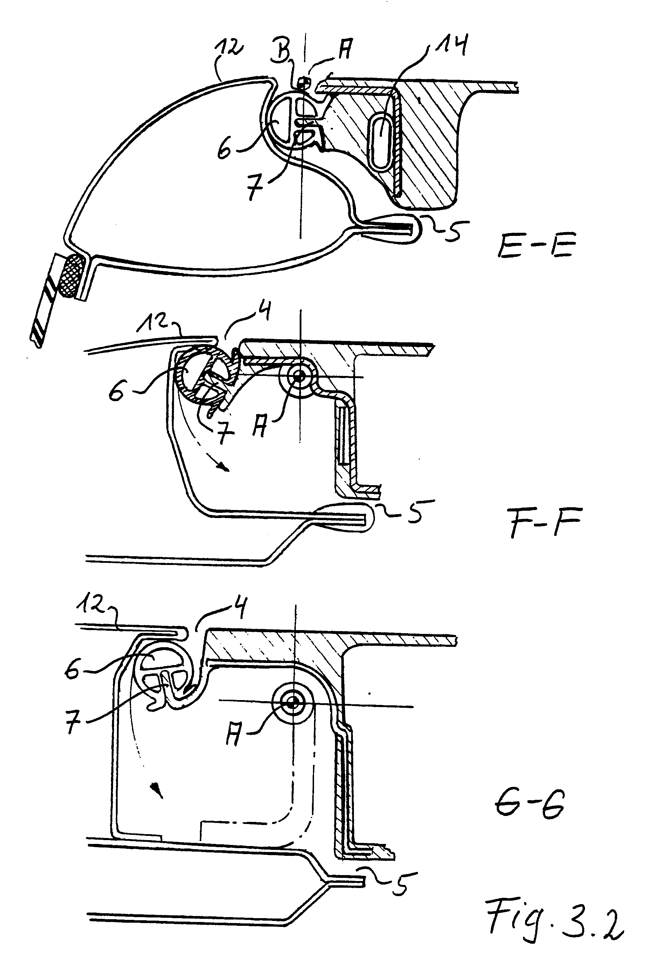

Im Schnitt C-C befindet sich der Befestigungssteg 7 - in Fahrtrichtung betrachtet - hinter der Schwenkachse A. Er beschreibt beim Öffnen der Fahrzeugtür 11 eine kreisförmige Bewegung um die Schwenkachse A nach außen. Entsprechend weist der Befestigungssteg 7 etwa senkrecht zum Fahrzeuginneren, so daß die umlaufende Türdichtung 6 die zwischen der Außenwand 1 der Fahrzeugtür 11 und der Karosserie 12 liegende äußere Türfuge 4 in der Nähe der Türaußenwand 1 abdichtet. In Figur 4 sind weitere Schnitte der Fahrzeugtür 11 sowie des korrespondierenden Türausschnitts der Fahrzeugkarosserie 12 gemäß Figur 2 dargestellt.

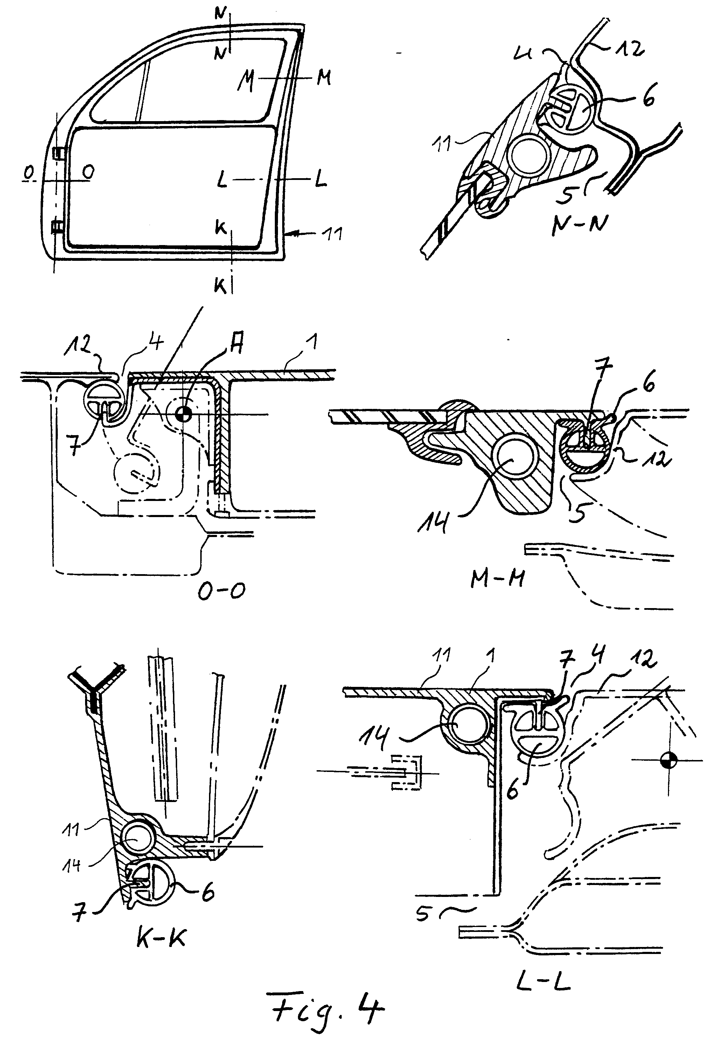

In Figur 5 ist eine bevorzugte Ausführung der Türdichtung 6 dargestellt. Die Türdichtung 6 weist dabei einen etwa ovalen Querschnitt mit zwei angesetzten, radial nach außen gerichteten Dichtlippen 61 auf. In der Türdichtung 6 ist ein etwa U-förmiges Stahlprofil 9 integriert, um die Klemmwirkung der Türdichtung 6 auf dem Befestigungssteg 7 zu gewährleisten.

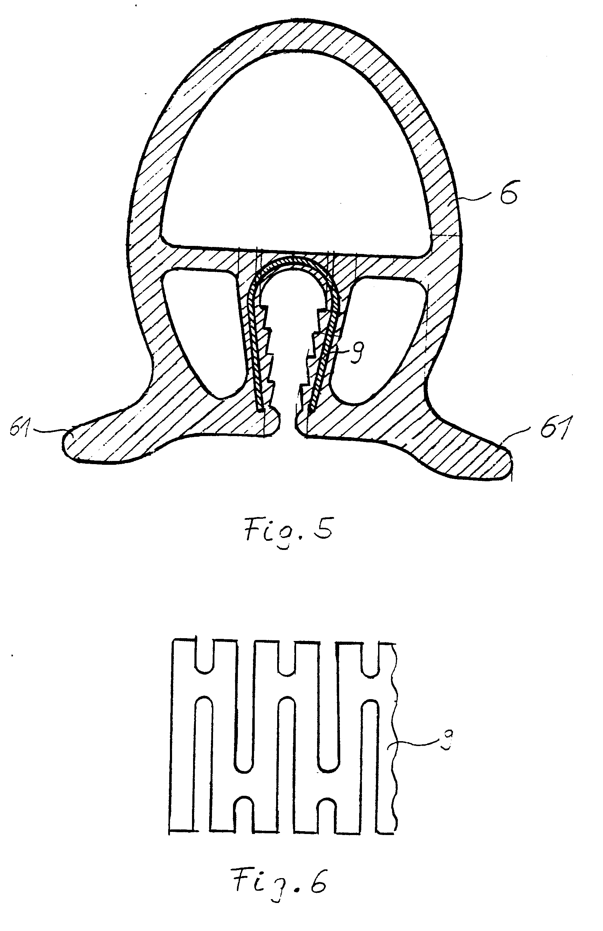

Um die Anpassungsfähigkeit der Türdichtung 6, insbesondere im Wendebereich, zu gewährleisten, ist der Klemmprofileinsatz 9 entsprechend Figur 6 ausgestanzt.

Mit der erfindungsgemäßen Anordnung einer umlaufenden Dichtung an der äußeren Türfuge ist es erstmals möglich, auch solche Fahrzeuge mit einer außen liegenden umlaufenden Türdichtung auszustatten, bei denen die Schwenkachse innerhalb der äußeren Fahrzeugkonturen und zwischen der vorderen und der hinteren Türkante verläuft.

**Ansprüche**

1. Fahrzeug mit wenigstens einer Fahrzeugtür (11) und mit einer umlaufenden Türdichtung (6), wobei die Fahrzeugtür (11)
-eine Außenwand (1) und eine
-im Abstand zu der Außenwand (1) angeordnete Innenwand (2) aufweist,
-wobei die Fahrzeugtür (11) mittels wenigstens eines Scharniers an der Fahrzeugkarosserie (12) - schwenkbar angelenkt ist,
-wobei die Fahrzeugtür (11) im geschlossenen Zustand mit dem entsprechenden Türausschnitt der Karosserie (12) einen um die Fahrzeugtür (11) umlaufenden Hohlraum (3) bildet,
-wobei die Schwenkachse (A) der Fahrzeugtür (11) den Hohlraum (3) zwischen der Fahrzeugtür (11) und der Fahrzeugkarosserie (13) so durchdringt, daß ein Teilbereich der Außenwand (1) der Fahrzeugtür (11) beim Öffnen der Fahrzeugtür (11) zum Fahrzeuginneren und der restliche Bereich der Außenwand (1) der Fahrzeugtür (11) gegenläufig bewegt wird,
-und wobei die umlaufende Türdichtung (6) den Hohlraum (3) zwischen der Fahrzeugkarosserie (12) und der Fahrzeugtür (11) abdichtet,
**dadurch gekennzeichnet,** daß die umlaufende Türdichtung (6) so an der Fahrzeugkarosserie (12) oder der Fahrzeugtür (11) angeordnet ist, daß die zwischen der Außenwand der Fahrzeugtür (11) und der Karosserie (12) gebildete äußere Türfuge (4) an oder in unmittelbarer Nähe der Türaußenwand (1) vollständig abgedichtet wird.

2. Fahrzeug mit wenigstens einer Fahrzeugtür nach Anspruch 1, **dadurch gekennzeichnet ,** daß die umlaufende Türdichtung (6) innerhalb des von der Fahrzeugtür (11) und der Fahrzeugkarosserie (12) gebildeten umlaufenden Hohlraums (3) verläuft.

3. Fahrzeug mit wenigstens einer Fahrzeugtür nach einem der Ansprüche 1 oder 2, **dadurch gekennzeichnet ,** daß die Fahrzeugtür (11) einen umlaufenden Befestigungssteg (7) aufweist, an dem die umlaufende Türdichtung (6) befestigbar ist.

4. Fahrzeug mit wenigstens einer Fahrzeugtür nach Anspruch 3, **dadurch gekennzeichnet,** daß der Befestigungssteg (7) in dem Bereich, der beim Öffnen der Fahrzeugtür (11) zum Fahrzeuginneren bewegt wird, im wesentlichen vom Fahrzeuginneren nach außen weist und in dem Bereich, der beim Öffnen der Fahrzeugtür (11) gegenläufig bewegt wird, im wesentlichen zum Fahrzeuginneren weist.

5. Fahrzeug mit wenigstens einer Fahrzeugtür nach einem der Ansprüche 1 bis 4, **dadurch gekennzeichnet,** daß die Schwenkachse (A) der Fahrzeugtür (11) an zwei Stellen die umlaufende Türdichtung (6) schneidet oder insbesondere tangiert.

6. Fahrzeug mit wenigstens einer Fahrzeugtür nach einem der Ansprüche 1 bis 5, **dadurch gekennzeichnet,** daß die umlaufende Türdichtung (6) einstückig ausgeführt ist.

7. Fahrzeug mit wenigstens einer Fahrzeugtür nach einem der Ansprüche 1 bis 6, **dadurch gekennzeichnet,** daß die umlaufende Türdichtung (6) an jeder Stelle einen wenigstens annähernd gleichen Querschnitt aufweist.

8. Fahrzeug mit wenigstens einer Fahrzeugtür nach einem der Ansprüche 1 bis 7, **dadurch gekennzeichnet ,** daß die umlaufende Türdichtung (6) einen Klemmprofileinsatz (9) mit etwa U-förmigem Querschnitt zur Befestigung an einem Befestigungssteg (7) aufweist.

9. Fahrzeug mit wenigstens einer Fahrzeugtür nach einem der Ansprüche 1 bis 8, **dadurch gekennzeichnet,** daß die umlaufende Türdichtung (6) einen etwa ringförmigen Querschnitt mit einer Mehrzahl sternförmig angeordneter Dichtlippen (61) aufweist.

10. Fahrzeug mit wenigstens einer Fahrzeugtür nach einem der Ansprüche 1 bis 9, **dadurch gekennzeichnet,** daß die Fahrzeugkarosserie (12) eine umlaufende Anlagefläche für die an der Tür (11) befestigte umlaufende Dichtung (6) aufweist.

11. Fahrzeug mit wenigstens einer Fahrzeugtür nach einem der Ansprüche 1 bis 9, **dadurch gekennzeichnet ,** daß die Fahrzeugtür (11) eine umlaufende Anlagefläche für die an der Fahrzeugkarosserie (12) befestigte umlaufende Dichtung (6) aufweist.

12. Fahrzeug mit wenigstens einer Fahrzeugtür nach einem der Ansprüche 1 bis 11, **dadurch gekennzeichnet,** daß die umlaufende Dichtung (6) beim Schließen der Fahrzeugtür (11) in einem solchen Winkel auf die Anlagefläche trifft, daß die umlaufende Dichtung (6) im wesentlichen ohne Gleitbewegung auf die Anlagefläche gedrückt und dabei komprimiert wird.

Fig. 1

Fig. 2

0 270 942

C

D

E

F

A

B

6

7

13 6

A

C-C

D-D

12

4

14

7

6

5

12

4

14

7

6

5

Fig. 3.1

E-E

F-F

G-G

Fig. 3.2

Fig. 4

Fig. 5

Fig. 6